**Europäisches Patentamt**

(19) **European Patent Office**

**Office européen des brevets**

(11) Publication number: **0 053 497**

**B1**

(12) # EUROPEAN PATENT SPECIFICATION

(45) Date of publication of patent specification: **08.05.85**

(51) Int. Cl.⁴: **F 24 D 11/02, F 24 J 3/00, F 24 D 17/00**

(21) Application number: **81305627.2**

(22) Date of filing: **27.11.81**

(54) **Solar assisted heating system.**

(30) Priority: **28.11.80 GB 8038283**

(43) Date of publication of application:
**09.06.82 Bulletin 82/23**

(45) Publication of the grant of the patent:
**08.05.85 Bulletin 85/19**

(84) Designated Contracting States:
**DE FR GB IT SE**

(56) References cited:
**DE-A-2 746 829**
**DE-A-2 758 773**
**DE-A-2 801 895**
**DE-A-2 854 055**
**DE-A-2 913 066**
**DE-B-2 744 468**
**US-A-1 992 745**

**KI KLIMA - KÄLTE - HEIZUNG, Nr. 12 1979 H. SCHWIND et al. "Solarunterstützes Wärmepumpensystem mit neuartigem Latentwärmespeicher" pages 511 to 520**

(73) Proprietor: **Exxon Research and Engineering Company**
**P.O.Box 390 180 Park Avenue**
**Florham Park New Jersey 07932 (US)**

(72) Inventor: **Moss, Gerald, Dr.**
**Trevose Sarajac Avenue East Challow**
**Wantage Oxfordshire (GB)**

(74) Representative: **Field, Roger Norton et al**
**ESSO Engineering (Europe) Ltd. Patents & Licences Apex Tower High Street**
**New Malden Surrey KT3 4DJ (GB)**

Courier Press, Leamington Spa, England.

## Description

This invention relates to a heating system assisted by solar energy.

Rising fuel prices tend to make solar energy a more attractive proposition, but the cost of solar energy rises with the temperature at which it must be delivered. It is desirable therefore to employ a system where solar energy is collected at relatively low temperatures and a heat pump is used to deliver this energy at the required utilisation temperature.

An article "Solarunterstütztes Wärmepumpensystem mit neuartigem Latentwärmespeicher" by H. Schwind, D. Wolff published in "Klima-Kälte Heizung" No. 12 1979 pp. 511 to 520 discloses a heating system comprising a solar radiation collector capable of supplying heat to one low temperature latent heat store and means for delivering heat from this heat store to the evaporator of a vapour-compression heat pump. In day time the load is supplied from another latent heat store whereas at night time the load is supplied from this heat store which obtains its heat by means of the heat pump from the other heat store which has been charged with heat from the solar collector during the day. There is no suggestion of using an adsorption heat pump, let alone a continuous carrier gas circulation system.

Also German Specification 2801895 discloses an adsorption heat pump comprising a source of low temperature heat, means for delivering heat from said source to an evaporator, means for delivering vaporised adsorbate from the evaporator to an adsorber housing adsorbent, means for heating adsorbent and adsorbed adsorbate housed in the adsorber, means for delivering vaporised adsorbate from the adsorber to a condenser, means for delivering condensed adsorbate from the condenser to the evaporator and means for obtaining heat from the condenser and delivering it to the load. This specification does not suggest the use of solar energy, let alone as a source of low temperature heat or of the continuous circulation of a carrier gas in the adsorption heat pump system.

U.S. Patent 1992745 discloses a refrigerating apparatus involving sorption and adsorption. An inert gas, hydrogen is used to create a diffusion barrier adjacent to the refrigerant vapour and the apparatus operates on a tidal flow system. There is no disclosure or suggestion therein of using an inert gas as a carrier gas, the purpose of which is to increase the rate of adsorption, desorption, condensation and evaporation.

We have now devised a heating system involving the use of an adsorption heat pump and according to this invention a heating system comprises a solar radiation collector capable of supplying heat to a heat of fusion heat store, means for delivering heat from the heat store to an evaporator, means for delivering vaporised adsorbate from the evaporator to an adsorber housing adsorbent, means for heating adsorbent and adsorbed adsorbate housed in the adsorber, means for delivering vaporised adsorbate from the adsorber to a condenser, means for delivering condensed adsorbate from the condenser to the evaporator and means for obtaining heat from the adsorber and from the condenser and delivering it to the load. There are also means for continuously circulating a carrier gas from the evaporator to the adsorber, from the adsorber to the condenser and from the condenser to the evaporator.

The solar radiation collector can take various forms and may for example comprise a simple unglazed black receiver in the form of a conduit through which a liquid, e.g. antifreeze (ethylene glycol) solution or salt solution, e.g. calcium chloride, is circulated. Usually the temperature of the liquid extracting heat from the solar radiation collector will be fairly low, e.g. from 5° to 15°C.

This heat has to be stored in a heat of fusion heat store and the most convenient method is by the use of encapsulated low melting point materials contained in a tank through which the liquid, e.g. antifreeze solution circulates.

The heat of fusion heat store comprises a container in which there are one or more liquid-tight heat conducting receptacles, for example plastic or elastomeric bags, each of which houses a substance with a relatively high latent heat of fusion i.e. above 120 kJ/kg. These receptacles are preferably made of flexible material to cope with expansion and contraction of the substance housed therein. Suitable substances include benzene (freezing point 5.5°C, latent heat of fusion 126 kJ/kg), formic acid (freezing point 8.4°C, latent heat of fusion 247 kJ/kg), acrylic acid (freezing point 13°C, latent heat of fusion 155 kJ/kg), para-xylene (freezing point 16°C, latent heat of fusion 164 kJ/kg), and glycerol (freezing point 18°C, latent heat of fusion 199 kJ/kg).

Communicating with the heat store e.g. through a conduit is an evaporator for the adsorbate. This is a container provided with a heat exchanger from which heat from the heat store is delivered to the adsorbate housed in the evaporator. Preferably there are means for extending the surface of the liquid in the evaporator, e.g. a large area fabric wick or a pump for pumping the liquid through a spray into the evaporator.

Communicating with the evaporator e.g. by a valved conduit, is an adsorber which houses adsorbent. There are also means for supplying heat to the adsorbent and adsorbate in the adsorber and this may be an electrical resistive heater, run for example by off-peak electricity. However it is primarily intended that this means for supplying heat shall be by heat exchange from the hot heat transfer fluid in the pipes from a domestic boiler. These pipes should have a coiled section passing through the adsorber, surrounding which is adsorbent and adsorbate. Heat is usually supplied to the adsorbate and adsorbent at about 150°C.

It is desirable that the adsorber should be able to be recharged at very low vapour pressures and consequently the preferred adsorbent/adsorbate system is 5A-zeolite molecular sieve/water, more preferably Y-zeolite molecular sieve/water.

There are means for obtaining heat from the adsorber and this is preferably a heat exchanger. This may for example, be a pipework in which water circulates communicating with the load, having a coiled section which is surrounded by the adsorbent housed in the adsorber.

There are means for delivering vaporised adsorbate from the adsorber to the condenser. This will usually be a conduit having a valve, and this valve will preferably be a non-return valve, so that condensed adsorbate cannot pass back into the adsorber. This conduit is usually connected to the top of the condenser. In this condenser the adsorbate vapour is condensed and if the adsorbate is water it usually delivers latent heat at a temperature of about 60°C.

There are means for obtaining heat from the condenser. This is preferably by heat exchange, for example a pipework with a coiled section located in the condenser in which water circulates, the pipework communicating with the load. This pipework preferably connects with the means for obtaining heat from the adsorber, there being a valve to control whether heat is obtained from the adsorber or whether it is obtained from the condenser.

It is highly desirable that there be heat exchange between fluid leaving the condenser for return to the evaporator and the fluid leaving the evaporator for entry to the adsorber. Accordingly it is preferred that the means for communicating the evaporator with the adsorber be in heat exchange relationship with the means for communicating the condenser with the evaporator.

The rate of adsorption can be increased by the use of the carrier gas, for example an inert gas such as nitrogen or even air. Accordingly as a feature of this invention there are means for circulating carrier gas from the top of the adsorber to the condenser, from the condenser to the evaporator and from the evaporator to the adsorber. As it enters the top of the evaporator the carrier gas should preferably be delivered through a sparger below the level of adsorbate in the evaporator. One or more conduits and a gas circulating blower are the convenient form of means for circulating carrier gas and the conduit connecting the top of the adsorber with the condenser should have a non-return valve therein preventing passage of adsorbate vapour from the condenser to the adsorber.

In a preferred embodiment the liquid circulating in the boiler and connecting pipework which supplies heat to the adsorber has a boiling point preferably above 150°C and therefore has the advantage that heat can be supplied at higher temperatures than 100°C without the necessity of subjecting the circulating liquid to high pressures.

Several commonly used heat transfer fluids may be used for this purpose, for example heat transfer oils, or inorganic substances such as $Si_2Cl_6$ which boils at 139°C. If $Si_2Cl_6$ is used then it may be under slight pressure to raise the boiling point to 150°C. Also one could use mineral oilbased fluids capable of operating at temperatures up to 315°C without pressurisation, e.g. fluids used by Wanson Co. Ltd., Boreham Wood, Herts in their thermopac thermal fluid heaters.

In accordance with this invention the system operates as follows. The solar radiation collector supplies heat to the latent heat of fusion heat store housing the substance of relatively high heat of fusion surrounded by a liquid such as antifreeze solution. Adsorbate is vaporised in the evaporator by circulated liquid, e.g. antifreeze and passes with the carrier gas (preferably in heat exchange relationship with fluid from the condenser) to the adsorber where it is adsorbed giving up heat of adsorption. Adsorbent is stripped from the adsorber by the means for heating adsorbent and adsorbate e.g. domestic boiler, and vaporised adsorbate is transferred with carrier gas to the condenser where it condenses giving up latent heat of condensation. Condensed adsorbate is returned to the evaporator whence it delivers sensible heat to the liquid, e.g. antifreeze solution, and hence to the heat store.

When the means for heating adsorbent is operating, latent heat is obtained from the condensation of adsorbate in the condenser. When the means for heating the adsorbent is not operating heat can be obtained as heat of adsorption from the adsorber, the solar radiation collector supplying heat to the heat store during daylight hours causing heat to be stored in the molten substance. When the molten substance freezes, latent heat of fusion is evolved supplying heat to the circulating liquid, e.g. antifreeze solution, and causing adsorbate vapour to be driven off to the adsorber from the adsorbate housed in the evaporator.

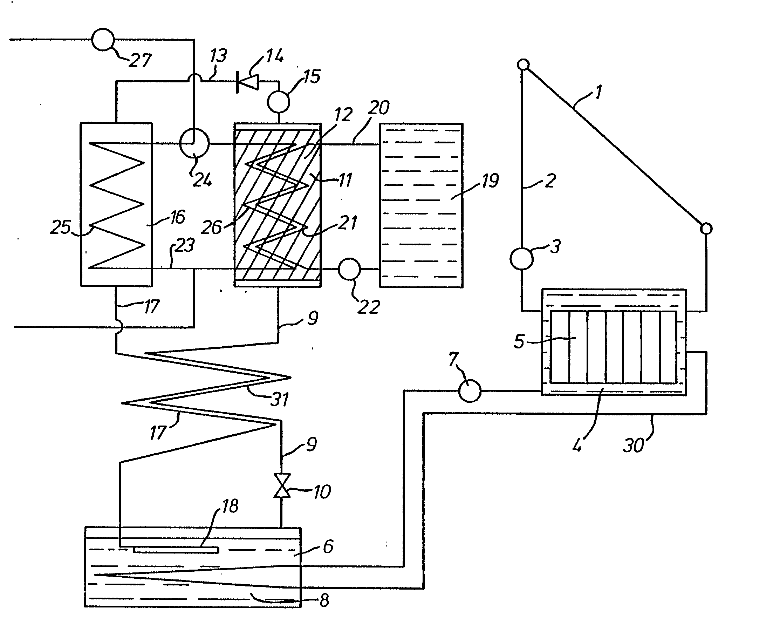

A preferred form of heating system is now described with reference to the accompanying drawing.

An array of solar panels diagrammatically indicated at 1 supplies heat to antifreeze solution at a maximum temperature of 18°C. The antifreeze solution is circulated by pump 3 through a pipework 2 to a heat store 4. This heat store 4 contains several elastomeric bags 5, each containing benzene. These bags 5 are surrounded by antifreeze solution. Heat can be transferred from the heat store 4 to an evaporator 6 through a conduit 30 having a circulation pump 7 and connected to heat exchanger 8.

The top of the evaporator 6 is connected by conduit 9 having valve 10 to the bottom of an adsorber 11. Part of conduit 9 forms one of the coils of heat exchanger 31. The adsorber 11 houses adsorbent 12 which is Y-zeolite molecular sieve.

Connected to the top of the adsorber 11 is a conduit 13 having a non-return valve 14 and a blower 15. This conduit 13 is connected to the top of a condenser 16. There is a conduit 17 (part of which forms one of the coils of heat exchanger 31) which connects the bottom of the condenser 16 with a sparger 18 which is immersed in adsorbate at the top of the evaporator 6.

Heat transfer fluid from a domestic boiler 19 circulates in the pipework 20 having heat exchange coil 21 in the adsorber 11. This pipework 20 has a circulation pump 22. Pipework 23 connects two-way valve 24, heat exchangers 25 and 26 in the condenser 16 and adsorber 11 and through this pipework 23 water circulates by means of pump 27 and leads to the load.

When the boiler 19 is operating, the adsorber 11 is stripped of water vapour (adsorbate) which is condensed in the condenser 16 and delivers its latent heat to the water circulating by pump 27 in coil 25 and piping 23 at about 60°C. From the condenser 16 the water passes through conduit 17 and heat exchanger 31 where it delivers heat, to the evaporator 6 where it delivers some more sensible heat and its temperature drops to the working temperature 5—15°C, of the heat store 4.

When the boiler is not operating it is possible to deliver heat from the heat store 4 to the load by switching valve 24 so that heat exchanger 26 in the adsorber 11 is incorporated in the load circuit piping 23. Under these conditions the benzene in the bags 5 freezes giving up its latent heat of fusion to the circulating antifreeze solution which supplies said heat to the evaporator 6, causing water vapour to pass from the evaporator 6 through conduit 9, receiving heat in the heat exchanger 31, to the adsorber 11 where it is adsorbed, giving up its heat of adsorption to the water circulating in coil 26 and hence to the load via piping 23. During the day the solar panels 1 are capable of delivering solar energy to the heat store 4 at temperatures in the range 5—15°C.

The carrier gas used is air and when heat is being delivered to the load either by stripping water vapour from the adsorber 11 or by adsorbing water vapour in the adsorber 11 valve 10 should be open and blower 15 operated. The air will be carried with water vapour from the top of the adsorber 11 to the condenser, through the sparger 18 and back to the adsorber 11. When heat is not being delivered valve 10 should be closed and blower 15 shut off.

## Claims

1. A heating system comprising a solar radiation collector (1), means for transferring heat from the collector (1) to a heat of fusion heat store (4), means (7, 30) for delivering heat from the heat store to an evaporator (6), means for delivering vaporised adsorbate from the evaporator (6) to an adsorber (11) housing adsorbent (12), means (19) for heating adsorbent (12) and adsorbed adsorbate housed in the adsorber (11), means (13) for delivering vaporised adsorbate from the adsorber (11) to a condenser (16), means (17) for delivering condensed adsorbate from the condenser (16) to the evaporator (6), means for continuously circulating a carrier gas from the evaporator (6) to the adsorber (11), from the adsorber (11) to the condenser (16) and from the condenser (16) to the evaporator (6), and means for obtaining heat from the adsorber (11) and from the condenser (16) and delivering it to the load.

2. A system, according to claim 1 wherein the heat store contains benzene housed in liquid-tight receptacles.

3. A system according to either of claims 1 and 2 wherein the means for delivering vaporised adsorbate from the adsorber to the condenser comprise a conduit (13) having a non-return valve (14).

4. A system according to any one of the preceding claims wherein there are means (17, 31) for exchanging heat between fluid passing from the evaporator (6) to the adsorber (11) and fluid passing from the condenser (16) to the evaporator (6).

5. A process for supplying heat to a load which comprises using a solar radiation collector to supply heat to a heat of fusion heat store containing a liquid which surrounds an encapsulated substance of relatively high latent heat of fusion, circulating said liquid from the heat store through a heat exchanger located within an evaporator wherein heat is obtained for delivery to the load by alternately using a supply of heat to strip adsorbate from an adsorbent housed in an adsorber, condensing vaporised and stripped adsorbate from the adsorber, recovering the latent heat of condensation as the adsorbate is condensed in the condenser and returning liquid adsorbate to the evaporator and recovering the heat of adsorption as adsorbate vaporised in the evaporator and delivered to the adsorber with the assistance of a continuous circulation of carrier gas is adsorbed in the adsorber, the adsorbate being vaporised in the evaporator as said substance in the heat store freezes thereby evolving latent heat of fusion.

6. A process according to claim 5 wherein said liquid in the heat of fusion heat store is an antifreeze solution.

7. A process according to either of claims 5 and 6 wherein the carrier gas is also circulated from the top of the adsorber to the condenser and from the condenser to the evaporator.

8. A process according to claim 7 wherein heat is exchanged between fluid as it passes from the condenser to the evaporator and fluid as it passes from the evaporator to the absorber.

## Patentansprüche

1. Heizsystem mit einem Sonnenstrahlenkollektor (1), mit Mitteln zur Übertragung von Wärme von dem Kollektor (1), um einen Schmelzwärmespeicher (4) zu erwärmen, mit Mitteln (7, 30) zur Abgabe von Wärme von dem Wärmespeicher an einen Verdampfer (6), mit Mitteln zur Abgabe von verdampftem Adsorbat von dem Verdampfer (6) an einen Adsorber (11), der ein Adsorptionsmittel (12) enthält, mit Mitteln (19) zum Erwärmen des Adsorptionsmittels (12) und des im Adsorber (11) untergebrachten adsorbierten Mittels, mit Mitteln (13) zur Abgabe des verdampften adsorbierten Mittels von dem Adsorber (11) an einen Kondensator (16), mit Mitteln (17) zur Abgabe des kondensierten adsorbierten Mittels von dem Kondensator (16) an den Verdampfer (6), mit Mitteln zum kontinuierlichen Zirkulieren eines Trägergases von dem Verdampfer (6) zu dem Adsorber (11), von dem Adsorber (11) zu dem Kondensator (16) und von dem Kondensator (16) zu dem Verdampfer (6), und mit Mitteln zum Abnehmen von Wärme von dem Adsorber (11) und von dem Kondensator (16) und zur Abgabe an die Last.

2. System nach Anspruch 1, wobei der Wärmespeicher Benzol enthält, das in flüssigkeitsdichten Behältern untergebracht ist.

3. System nach Anspruch 1 oder 2, wobei die Mittel zur Abgabe von verdampftem adsorbiertem Mittel von dem Adsorber an den Kondensator eine Leitung (13) aufweisen, die ein Rückschlagventil (14) enthält.

4. System nach einem der vorhergehenden Ansprüche wobei Mittel (17, 31) vorgesehen sind, um Wärme zwischen einem Fluid, das von dem Verdampfer (6) zu dem Adsorber (11) fließt und einem Fluid auszutauschen, das von dem Kondensator (16) zu dem Verdampfer (6) fließt.

5. Verfahren zum Zuführen von Wärme zu einer Last, die einen Sonnenstrahlenkollektor aufweist, um Wärme an einen Schmelzwärmespeicher abzugeben, der eine Flüssigkeit enthält, die eine gekapselte Substanz von verhältnismäßig hoher latenter Schmelzwärme umgibt, daß die Flüssigkeit von dem Wärmespeicher durch einen Wärmeaustauscher zirkuliert wird, der in einem Verdampfer angeordnet ist, in welchem Wärme erhalten wird, um an die Last abgegeben zu werden, indem abwechselnd Wärme verwendet wird, um einen adsorbierten Stoff von einem in einem Adsorber untergebrachten Adsorbtionsmittel abzutrennen, der verdampfte und abgetrennte adsorbierte Stoff aus dem Adsorber kondensiert wird, die latente Kondensationswärme wiedergewonnen wird, während der adsorbierte Stoff in dem Kondensator kondensiert wird und flüssiger, adsorbierter Stoff wieder in den Verdampfer zurückgeführt und die Adsorptionswärme wiedergewonnen wird, während der adsorbierte Stoff in dem Verdampfer verdampft und an den Adsorber unter Zuhilfenahme einer kontinuierlichen Zirkulation von Trägergas geliefert und in dem Adsorber adsorbiert wird, wobei der adsorbierte Stoff in dem Verdampfer verdampft wird, während die Substanz im Wärmespeicher friert und dabei latente Schwelzwärme freisetzt.

6. Verfahren nach Anspruch 5, dadurch gekennzeichnet, daß die Flüssigkeit im Schmelzwärmespeicher eine Frostschutzlösung ist.

7. Verfahren nach Anspruch 5 oder 6, dadurch gekennzeichnet, daß das Trägergas von der Oberseite des Adsorbers zum Kondensator und von dem Kondensator zu dem Verdampfer umgewälzt wird.

8. Verfahren nach Anspruch 7, dadurch gekennzeichnet, daß Wärme zwischen dem Fluid, welches von dem Kondensator zu dem Verdampfer strömt, und dem Fluid ausgetauscht wird, das von dem Verdampfer zum Absorber fließt.

**Revendications**

1. Système de chauffage comprenant un capteur de rayonnement solaire (1), des moyens pour la transmission de chaleur du capteur (1) à un magasin de chaleur à chaleur de fusion (4), des moyens (7, 30) pour l'envoi de chaleur du magasin de chaleur à un évaporateur (6), des moyens pour l'envoi d'adsorbat vaporisé de l'évaporateur (6) à un adsorbeur (11) contenant de l'adsorbant (12), des moyens (19) de chauffage de l'adsorbant (12) et de l'adsorbat contenus dans l'adsorbeur (11), des moyens (13) pour l'envoi d'adsorbat vaporisé de l'adsorbeur (11) à un condenseur (16), des moyens (17) pour l'envoi d'adsorbat condensé du condenseur (16) à l'évaporateur (6), des moyens assurant la circulation en continu d'un gaz porteur de l'évaporateur (6) à l'adsorbeur (11), de l'adsorbeur (11) au condenseur (16) et du condenseur (16) à l'évaporateur (6), et des moyens pour l'obtention de chaleur à partir de l'adsorbeur (11) et du condenseur (16) et pour son envoi à la charge.

2. Système selon la revendication 1, caractérisé en ce que le magasin de chaleur contient du benzène logé dans des réceptacles étanches au liquide.

3. Système selon l'une des revendications 1 ou 2, caractérisé en ce que les moyens pour l'envoi d'adsorbat vaporisé de l'adsorbeur au condenseur comprennent un conduit (13) comportant un clapet de non retour (14).

4. Système selon l'une quelconque des revendications 1 à 3, caractérisé en ce qu'il comprend des moyens (17, 31) d'échange de chaleur entre le fluide passant de l'évaporateur (6) à l'adsorbeur (11) et le fluide passant du condenseur (16) à l'évaporateur (6).

5. Procédé pour la fourniture de chaleur à une charge, caractérisé en ce qu'il comporte l'utilisation d'un capteur de rayonnement solaire pour la fourniture de chaleur à un magasin de chaleur à chaleur de fusion contenant un liquide qui entoure une substance encapsulée à chaleur latente de fusion relativement élevée, la mise en circulation dudit liquide depuis le magasin de chaleur à travers un échangeur de chaleur situé dans un évaporateur dans lequel on obtient de la chaleur pour envoi à la charge en procédant alternativement à l'utilisation d'une source de chaleur pour extraire de l'adsorbat d'un adsorbant logé dans un adsorbeur, à la condensation de l'adsorbat vaporisé et extrait de l'adsorbeur, à la récupération de la chaleur latente de condensation quand l'adsorbat se condense dans le condenseur et au renvoi de l'adsorbat liquide à l'évaporateur et à la récupération de la chaleur d'adsorption quand l'adsorbat vaporisé dans l'évaporateur et envoyé à l'adsorbeur avec l'assistance d'une circulation continue de gaz porteur est adsorbé dans l'adsorbeur, l'adsorbat étant vaporisé dans l'évaporateur quand ladite substance présente dans le magasin de chaleur se congèle dégageant ainsi de la chaleur latente de fusion.

6. Procédé selon la revendication 5, caractérisé en ce que ledit liquide présent dans le magasin de chaleur à chaleur de fusion est une solution antigel.

7. Procédé selon l'une des revendications 5 ou 6, caractérisé en ce qu'on fait aussi circuler le gaz porteur du sommet de l'adsorbeur au condensateur et du condenseur à l'évaporateur.

8. Procédé selon la revendication 7, caractérisé en ce que de la chaleur est échangée entre le fluide en cours de passage du condenseur à l'évaporateur et le fluide en cours de passage de l'évaporateur à l'adsorbeur.